# EUROPEAN PATENT APPLICATION

(11) **EP 4 140 653 A1**
(43) Date of publication of application: **01.03.2023**
(21) Application number: 21912330.4
(22) Date of filing: 19.10.2021
(51) Int. Cl.: B25D 1/02, B60R 21/00, B60R 99/00

(54) **GLASS BREAKING DEVICE**

(30) Priority: 08.07.2021 KR 20210089738
(71) Applicant: Schaffengott Co.,Ltd., Busan 48060 (KR)
(72) Inventor: KWON, Ik Hwan, Busan 46773 (KR)
(74) Representative: AWA Sweden AB
(86) International application number: PCT/KR2021/014552
(87) International publication number: WO 2023/282393

(57) **Abstract**

The present disclosure relates to a tempered glass crushing device including a support unit (110) that is disposed in contact with a surface of a tempered glass to be crushed and has a tip movement hole (111a) formed in a plate surface thereof, a hitting unit (120) that is vertically movably coupled to an upper portion of the support unit (110) and has a crushing tip (123) for hitting the tempered glass through the tip movement hole (111a) while lowered to a central region, and a safety pin (140) inserted between the support unit (110) and the hitting unit (120) to prevent the hitting unit (120) from being lowered arbitrarily.

## Description

### CROSS-REFERENCE TO RELATED APPLICATION

This application claims priority to and the benefit of Korean Patent Application No. 2001-0089738, filed on July 8, 2001.

### BACKGROUND

### 1. Field of the Invention

The present disclosure relates to a tempered glass crushing device, and more particularly, to a flat plate-type tempered glass crushing device for crushing tempered glass in an emergency situation in a vehicle, a building, or the like.

### 2. Discussion of Related Art

When fires occur in vehicles due to vehicle collision accidents, minor collision accidents, rollover accidents, overturning accidents, reverse collision accidents, falling accidents, flooding accidents, or the like on expressways, general roads, or the like, and when a driver fails to evacuate the outside of the vehicles, serious casualties occur.

In particular, property loss and casualties due to fires in buses are increasing not only in Korea but also worldwide, and the government's recommendations for emergency exits and fire extinguishers have exceeded 1,000 in five years. However, despite the government's measures, the number of accidents has increased every year.

The most common cause of death in these accidents is suffocation. In the case of a fire, it is difficult to secure vision due to smoke, and thus escape is delayed, and of course, in most cases, suffocation casualties occur due to airway stenosis with just one inhalation of smoke.

In addition to fires, when a vehicle falls into water, the water flows into the vehicle, the door is not easily opened due to the pressure difference inside and outside of the vehicle, a long time is taken to escape from the vehicle, and thus a survival rate is greatly reduced.

Most glass windows provided in vehicles are made of tempered glass and are not easily broken because the tempered glass is a heat-treated special glass having a strength that is four to five times higher than that of general glass. In recent years, double-bonded glass, which is increasingly used to secure a quiet indoor space, has become more difficult to crush.

An escape safety device commonly used in a bus is a hammer. However, in an emergency situation, since a rescuer himself/herself should find the hammer and crush the glass, the hammer is hardly used. The hammer is often tied up to prevent theft or lost and thus may be often not used in real situations. For example, in a fire in a bus, when the fire occurs, it is difficult to find the safety hammer because of smoke caused by the fire, and even when the hammer is found, bus glass made of tempered glass cannot be quickly broken, and thus the escape time is delayed resulting in more casualties. In particular, unlike in foreign countries, in domestic express buses without intermediate doors, the escape of occupants from the buses in the event of a fire is difficult. Even in the case of electric vehicles, the number of which has been increasing recently, doors cannot be opened due to battery discharge, and thus the occupants die in the vehicles due to the fire. In midsummer, on a rooftop parking lot, since the doors are not opened, the occupants are often rescued by passing citizens.

Accordingly, in recent years, a glass crushing device that may easily crush the tempered glass instead of the hammer has been provided in the vehicle.

In recent years, an example of the glass crushing device provided in the vehicle has been disclosed in Korean Patent Application Publication No. 10-2020-0144433 titled "glass crushing device." In the glass crushing device according to the related art as disclosed, a crushing unit having hardness is positioned inside a casing in a compressed state by a compression spring, and when a user releases a fixing force on the compression spring, the crushing unit is operated by an elastic force of the compression spring to crush the tempered glass.

However, the glass crusher using the elastic force of the compression spring according to the related art frequently fails to operate properly due to a malfunction of the compression spring and the compression spring should be accommodated in the glass crusher. Therefore, when the glass crushing device having a high vertical shape is attached to a glass window, there are inconveniences that aesthetic aspects are spoiled or the passage of the user is restricted, and since uniform quality cannot be maintained according to spring quality, frequency of use, and storage environment, the glass crushing device is not sufficient as a glass crushing device that should always maintain the best performance state.

Further, low-cost plastics or metal heat treatment products are used as most of the crushing tips mounted on commercially available glass crushing hammers, and thus in most cases, the crushing tips cannot actually break glass. When the user hits a specific portion such as an edge of the glass, the glass may break barely, and thus effectiveness is low. Manufacturers of related products also generally do not use high-hardness crushing tips that can easily break the tempered glass as a material due to cost reduction and low marketability.

### SUMMARY OF THE INVENTION

A purpose of the present disclosure is to provide a tempered glass crushing device that is manufactured in the form of a flat plate having a low height and may be attached to a glass window without protruding.

Another purpose of the present disclosure is to provide a tempered glass crushing device capable of being used without malfunction because an elastic member is not used.

The purposes and various advantages of the present disclosure will become more apparent from exemplary embodiments of the present disclosure by those skilled in the art.

The purpose of the present disclosure may be achieved by a flat plate-type tempered glass crushing device. According to an aspect of the present disclosure, there is provided a tempered glass crushing device including a support unit (110) that is disposed in contact with a surface of a tempered glass to be crushed and has a tip movement hole (111a) formed in a plate surface thereof, a hitting unit (120) that is vertically movably coupled to an upper portion of the support unit (110) and has a crushing tip (123) for hitting the tempered glass through the tip movement hole (111a) when lowered to a central region, and a safety pin (140) inserted between the support unit (110) and the hitting unit (120) to prevent the hitting unit (120) from being lowered arbitrarily, wherein the support unit (110) may include a support plate (111) through which the tip movement hole (111a) is formed to pass and which is disposed on the surface of the tempered glass to be crushed, a crushing tip guide tube (113) formed perpendicular to an outer periphery of the tip movement hole (111a) to guide lowering of the crushing tip (123), and a lower outer guide tube (112) disposed on a concentric circle with the crushing tip guide tube (113) outside the crushing tip guide tube (113), and wherein the hitting unit (120) may include an upper casing (121) pressed for lowering, a tip fixing shaft (122) that is formed vertically downward in a central region of the upper casing (121), accommodates the crushing tip (123) such that a lower end of the crushing tip (123) is exposed to a lower side, and is lowered along the crushing tip guide tube (113), and an upper outer guide tube (125) that is provided on a concentric circle with an outer periphery of the tip fixing shaft (122) and is lowered to be circumscribed to the lower outer guide tube (112) when the hitting unit (120) is lowered.

The lower outer guide tube (112) may include a plurality of guide plates (112a, 112b) arranged in an arc shape at regular angular intervals, and a plurality of shape retaining plates (115) that are arranged between the adjacent guide plates (112a, 112b), are formed at a height higher than the guide plates (112a, 112b), and are detachably coupled to the support plate (111) when the hitting unit (120) is lowered.

The safety pin (140) may include a safety pin body (141), an outer tube fitting ring (143) that is provided inside the safety pin body (141), is formed to correspond to an outer diameter of the lower outer guide tube (112), and is elastically coupled to the lower outer guide tube (112), a handle (145) provided behind the safety pin body (141), wherein a tip end of the outer tube fitting ring (143) may include a pressing neck (143a) which is formed in a straight shape in a predetermined length in a fitting direction of the lower outer guide tube (112) and is elastically in contact with and presses an outer wall of the lower outer guide tube (112), and an outer bent end (143b) bent outward from an end of the pressing neck (143a), and wherein an elastic clearance space (144) may be formed between the outer bent end (143b) and the side wall (141a) of the safety pin body (141) so that the outer tube fitting ring (143) is elastically deformed when the lower outer guide tube (112) is attached or detached.

A lower hook (113a) and an upper hook (122c), which are locked by and coupled to each other to guide the lowering of the tip fixing shaft (122), may be provided at an upper end of the crushing tip guide tube (113) and a lower end of the tip fixing shaft (122) in corresponding shapes.

The tempered glass crushing device may further include a display unit (130) detachably coupled to an upper surface of the upper casing (121).

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIGS. 1 and 2 are perspective views illustrating a state in which a handle is coupled to a tempered glass crushing device according to the present disclosure from different angles;
FIGS. 3 and 4 are exploded perspective views illustrating a configuration of the tempered glass crushing device according to the present disclosure from different angles;
FIG. 5 is an exemplary view illustrating a plane state in which the safety pin is coupled to a support according to the present disclosure;
FIG. 6 is an exemplary view illustrating a state in which the safety pin is removed from the tempered glass crushing device according to the present disclosure; and
FIGS. 7 and 8 are cross-sectional views illustrating a process of crushing tempered glass by the tempered glass crushing device according to the present disclosure.

### DETAILED DESCRIPTION OF EXEMPLARY EMBODIMENTS

In order to fully understand the present disclosure, exemplary embodiments of the present disclosure will be described with reference to the accompanying drawings. The embodiments of the present disclosure may be modified into various forms, and the scope of the present disclosure should not be construed to be limited to the embodiments described below in detail. The present embodiments are provided to more completely describe the present disclosure to those skilled in the art. Thus, the shapes and the like of components of the drawings are expressed exaggeratedly to emphasize a clearer description thereof. It should be noted that, in each drawing, the same member is illustrated with the same reference numeral. Detailed descriptions of well-known functions and configurations determined to unnecessarily make the subject matter of the present disclosure unclear will be omitted.

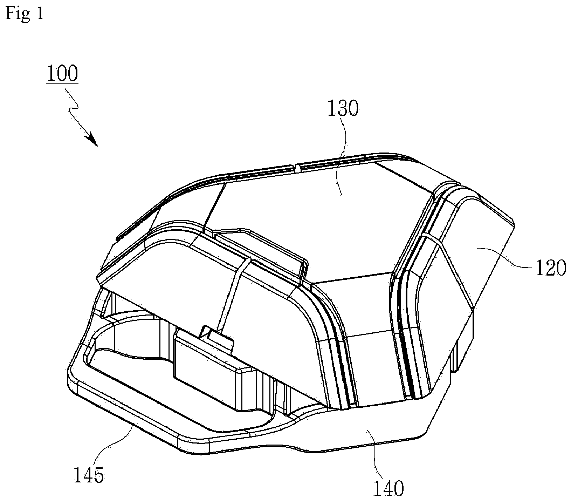

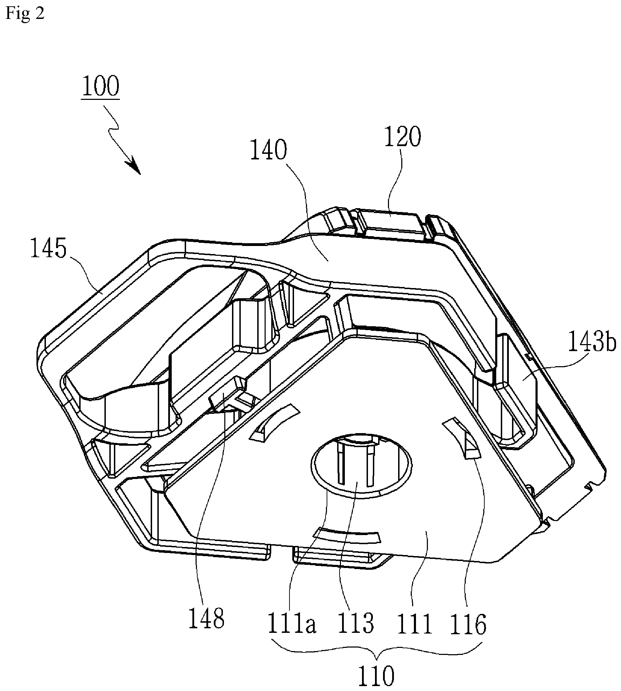

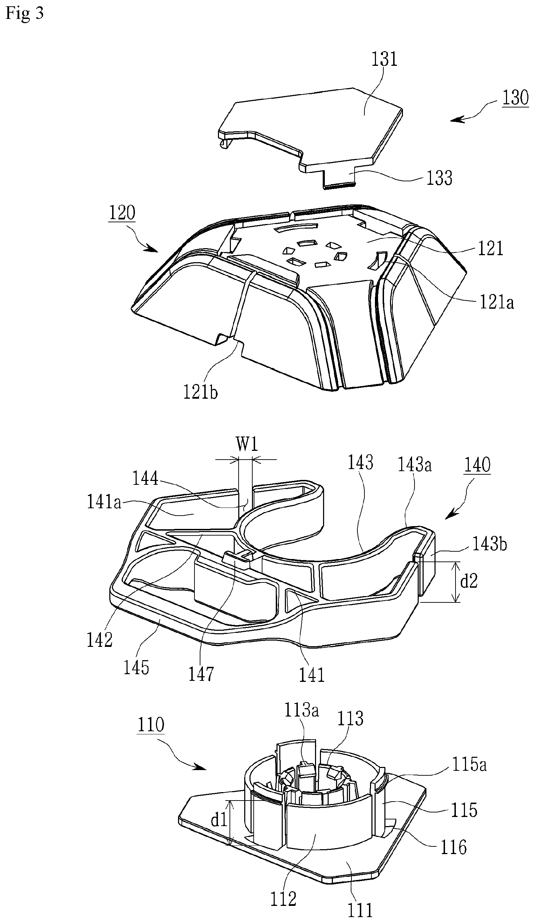

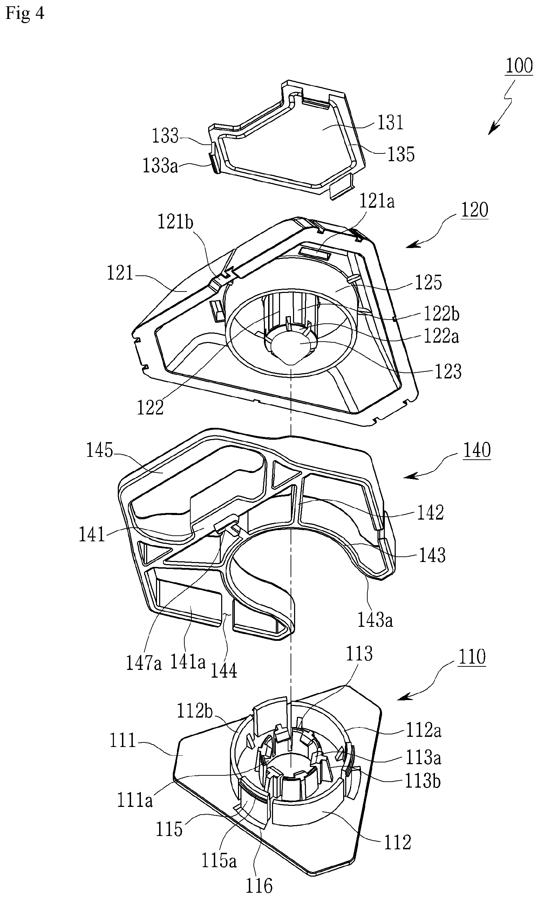

FIGS. 1 and 2 are perspective views illustrating a state in which a handle 145 is coupled to a tempered glass crushing device 100 according to the present disclosure from different angles, and FIGS. 3 and 4 are exploded perspective views illustrating a configuration of the tempered glass crushing device 100 from different angles.

As illustrated, the tempered glass crushing device 100 according to the present disclosure includes a support unit 110 disposed on a surface of a tempered glass to be crushed, a hitting unit 120 that is provided above the support unit 110 to be vertically movable and hits and crushes the tempered glass, a safety pin 140 inserted between the hitting unit 120 and the support unit 110 to prevent the hitting unit 120 from being lowered in normal times, and a display unit 130 coupled to an upper portion of the hitting unit 120.

The tempered glass crushing device 100 according to the present disclosure entirely has a flat shape because the support unit 110 and the hitting unit 120 are formed side by side in the form of a flat plate having a predetermined area. Accordingly, even when the tempered glass crushing device 100 is attached to a glass window of a bus, the tempered glass crushing device 100 does not protrude outward, and thus an external appearance is not ruined.

Further, since the hitting unit 120 hits and crushes the tempered glass when lowered by pressing of a user after the safety pin 140 is removed without a separate elastic member, there is no risk of malfunction of the elastic member, and thus reliable operation can be performed.

The support unit 110 is in contact with the surface of the tempered glass to be crushed and supports the hitting unit 120 so that the hitting unit 120 hits the tempered glass and applies an impact to the tempered glass when stably lowered. As illustrated in FIGS 3. and 4, the support unit 110 includes a support plate 111 in which a tip movement hole 111a is formed to pass through a central region thereof, a crushing tip guide tube 113 formed vertically upward to have a predetermined height so as to surround the tip movement hole 111a, and a lower outer guide tube 112 formed to have a predetermined height on a concentric circle with the crushing tip guide tube 113.

The support plate 111 is provided in the form of a plate having a predetermined area in contact with the surface of the tempered glass to apply a supporting force so that the hitting unit 120 applies an impact when lowered. As illustrated, the support plate 111 may be provided in various polygonal shapes or disk shapes as well as triangular shapes.

The tip movement hole 111a through which the hitting unit 120 and a crushing tip 123 come into contact with the tempered glass when lowered is formed to pass through the central region of the support plate 111.

The crushing tip guide tube 113 is vertically formed to have a predetermined height along an inner wall surface of the tip movement hole 111a and guides the crushing tip 123 to the tip movement hole 111a when the hitting unit 120 is lowered. The crushing tip guide tube 113 has a plurality of lower hooks 113a formed at regular intervals at an upper end in a circumferential direction and reinforcement ribs 113b formed on an outer wall surface of the crushing tip guide tube 113 having the lower hooks 113a to support the lower hooks 113a.

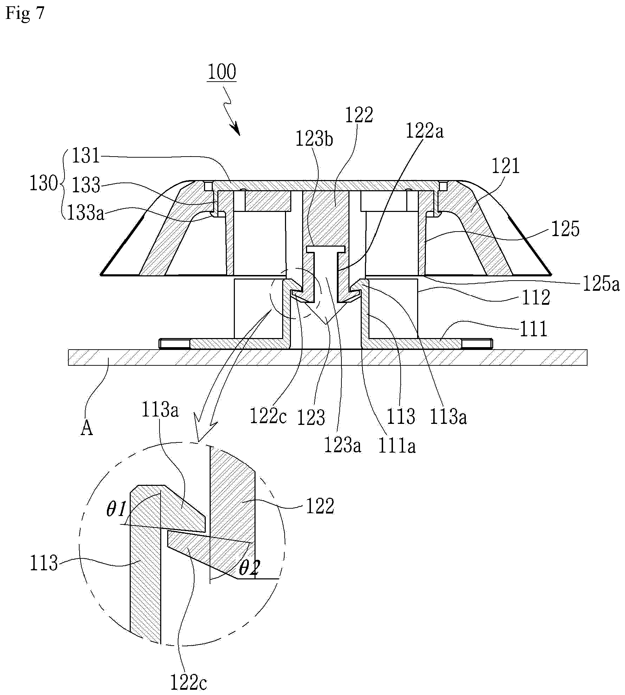

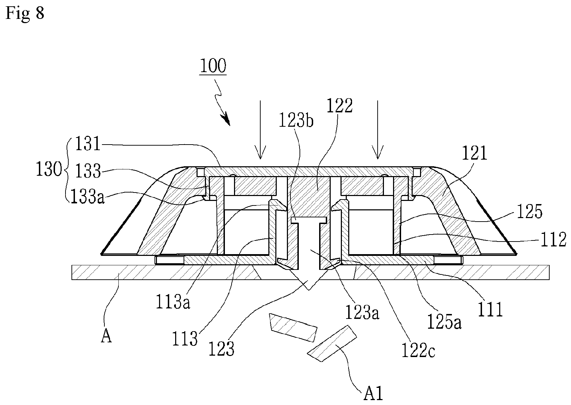

FIG. 7 is a cross-sectional view illustrating a pre-hitting state in which the hitting unit 120 is elevated, and FIG. 8 is a cross-sectional view illustrating a state in which the hitting unit 120 hits a tempered glass A when lowered.

As illustrated in FIGS. 7 and 8, the crushing tip guide tube 113 surrounds a tip fixing shaft 122 surrounding the crushing tip 123 of the hitting unit 120 and guides the tip fixing shaft 122 so that the tip fixing shaft 122 moves to the tip movement hole 111a.

The crushing tip guide tube 113 is formed to have an outer diameter greater than that of the tip fixing shaft 122. In this case, the lower hooks 113a are engaged with upper hooks 122c formed in the tip fixing shaft 122 to prevent the hitting unit 120 from being separated from the support unit 110.

As illustrated in an enlarged portion of FIG. 7, the lower hook 113a is not formed at an angle perpendicular to the ground but is formed to have a first acute angle θ1 inclined downward, and the upper hook 122c is formed to have a second acute angle θ2 inclined upward in a direction opposite to the first acute angle θ1. Accordingly, a lower surface of the lower hook 113a and an upper surface of the upper hook 122c are coupled to each other to obliquely cross each other, and when the upper hook 122c is about to escape to the outside of the crushing tip guide tube 113, the upper hook 122c is physically caught by the lower hook 113a.

Due to this structure, the crushing tip guide tube 113 receives a force in a direction toward the tip fixing shaft 122, the tip fixing shaft 122 receives a force toward the crushing tip guide tube 113, and thus the crushing tip guide tube 113 and the tip fixing shaft 122 are gathered in a direction in which the crushing tip guide tube 113 and the tip fixing shaft 122become closer to each other.

Accordingly, the tip fixing shaft 122 to which the upper hook 122c is coupled is maintained in a state of being restrained by the crushing tip guide tube 113.

The reinforcement rib 113b formed on a rear surface of each of the lower hooks 113a reinforces the outer wall surface of the crushing tip guide tube 113 when the crushing tip 123 and the tip fixing shaft 122 are lowered, and thus firmly maintains and supports a position without being broken by a downward pressure of the crushing tip 123.

The lower outer guide tube 112 is formed to have a predetermined height on the support plate 111 to have an outer diameter greater than that of the crushing tip guide tube 113 on a concentric circle with the crushing tip guide tube 113. The lower outer guide tube 112 is formed by coupling a plurality of guide plates 112a and 112b arranged at regular angular intervals and a plurality of shape retaining plates 115 arranged between the adjacent guide plates 112a and 112b.

The lower outer guide tube 112 has an outer diameter corresponding to an inner diameter of the upper outer guide tube 125 formed in the hitting unit 120, and as illustrated in FIG. 8, when the hitting unit 120 is lowered, an inner wall surface of the upper outer guide tube 125 moves while in contact with an outer wall surface of the lower outer guide tube 112. Accordingly, in the hitting unit 120, as the tip fixing shaft 122 is moved along the crushing tip guide tube 113 and the upper outer guide tube 125 is moved along the lower outer guide tube 112, the crushing tip 123 stably and accurately hits the surface of the tempered glass in contact with the tip movement hole 111a without shaking.

The shape retaining plate 115 is dispose between the adjacent guide plates 112a and 112b, and when the user does not press the hitting unit 120, the hitting unit 120 is maintained in a standby position elevated from the support plate 111. The shape retaining plate 115 is formed to have a predetermined height higher than a height of each of the guide plates 112a and 112b. Further, a holding step 115a on which a lower end of the upper outer guide tube 125 is held protrudes at a predetermined height outward from an outer side of an upper end of the shape retaining plate 115

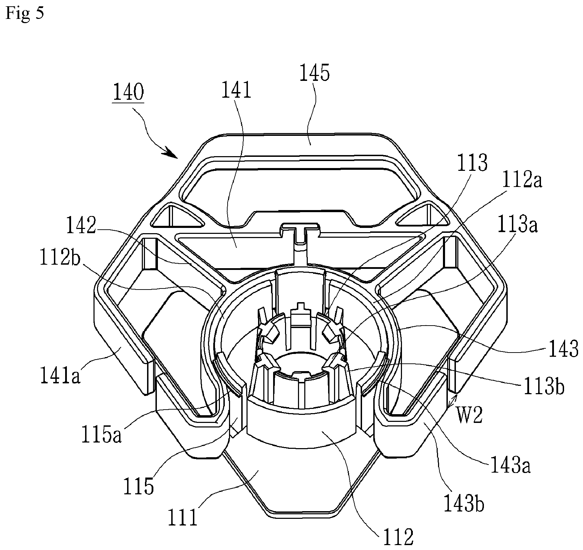

A lower end 125a of the upper outer guide tube 125 is held on an upper end of the holding step 115a, and the safety pin 140 is inserted between the support plate 111 and the holding step 115a. As illustrated in FIG. 3, a height d1 from the support plate 111 to the holding step 115a is provided to correspond to a height d2 of a side wall 141a of the safety pin 140. Accordingly, when the safety pin 140 is inserted between the support plate 111 and the hitting unit 120, as illustrated in FIG. 5, the safety pin 140 is inserted between the support plate 111 and the holding step 115a.

Further, as illustrated in FIG. 7, in the standby position, the lower end 125a of the upper outer guide tube 125 is held on the holding step 115a, and thus the hitting unit 120 is lowered to the support unit 110 and is maintained at a raised position.

Meanwhile, the holding step 115a is broken from the shape retaining plate 115 when the user presses the hitting unit 120, and the shape retaining plate 115 is not vertically fixed to the support plate 111 and is bent in a direction of the crushing tip guide tube 113, and thus the hitting unit 120 may be lowered. To this end, as illustrated in FIG. 4, a cut groove 116 is formed in a coupling region between a lower end of the shape retaining plate 115 and the support plate 111. The lower end of the shape retaining plate 115 is coupled to the support plate 111 with a thin thickness, and the cut groove 116 is formed on a rear side with a predetermined width. Accordingly, when pressure is applied to the shape retaining plate 115 from the upper side, the shape retaining plate 115 is broken or bent in an outward direction in which the cut groove 116 is formed.

When the holding step 115a is broken, the holding step 115a for holding the upper outer guide tube 125 is removed, and thus the hitting unit 120 is lowered toward the support plate 111 as illustrated in FIG. 8.

The user may identify whether the tempered glass crushing device 100 is used by viewing a state in which the holding step 115a is broken or bent.

The hitting unit 120 is lowered from the upper side to the lower side of the support unit 110 and hits and crushes the tempered glass A. As illustrated in FIGS. 3 and 4, the hitting unit 120 includes an upper casing 121, the tip fixing shaft 122 formed downward in a central region of the upper casing 121, the crushing tip 123 that is accommodated inside the tip fixing shaft 122 and hits and crushes the tempered glass A, and the upper outer guide tube 125 disposed on a concentric circle with an outer periphery of the tip fixing shaft 122 and lowered along the lower outer guide tube 112.

The upper casing 121 fixes the crushing tip 123 and allows the user to lower the crushing tip 123 by pressing by hand. The upper casing 121 has a flat plate shape corresponding to the support plate 111 and is formed in the form of a flat housing having a side surface to have a predetermined height to cover the tip fixing shaft 122 accommodated therein.

A plurality of leg locking grooves 121a to which coupling legs 133 of a display plate 131 are coupled are formed in a plate surface of the upper casing 121. The coupling leg 133 formed at a lower portion of the display plate 131 is inserted into the leg locking groove 121a, and a looking hook 133a formed at a lower portion of the coupling leg 133 is locked by and couple to the leg locking groove 121a.

A stopper insertion groove 121b is cut in a lower portion of the upper casing 121, and as illustrated in FIG. 1, when the safety pin 140 is coupled to the support unit 110, an upper stopper 147 of the safety pin 140 may be inserted into the stopper insertion groove 121b.

The tip fixing shaft 122 is formed vertically downward on an upper inner wall surface of the upper casing 121 to support the crushing tip 123. As illustrated in FIGS. 4 and 7, the tip fixing shaft 122 exposes only the crushing tip 123 to the lower side. That is, the tip fixing shaft 122 minimizes a contact area of the crushing tip 123 in contact with the tempered glass A to maximize hitting efficiency at a time of hitting.

As illustrated in FIG. 7, a tip insertion hole 122a is formed inside the tip fixing shaft 122. A tip support shaft 123a of the crushing tip 123 is inserted into the tip insertion hole 122a. A coupling extension end 123b formed at an upper end of the tip support shaft 123a is locked by and coupled to the inside of the tip insertion hole 122a so that a location of the crushing tip 123 inside the tip support shaft 123a is fixed.

The plurality of upper hooks 122c are provided at a lower end of the tip fixing shaft 122 in a circumferential direction. The upper hooks 122c are provided to protrude outward in a radial direction and are engaged with the upper hook 122c of the tip fixing shaft 122 as illustrated in FIG. 7 to prevent separation of the crushing tip 123 and enable the hitting unit 120 to be stably lowered.

In this case, a lower hook guide groove 122b for guiding movement of the lower hook 113a engaged with the upper hook 122c when the hitting unit 120 is lowered is recessed with respect to a plate surface in an outer peripheral surface of the tip fixing shaft 122. Accordingly, when the hitting unit 120 is lowered, the plurality of lower hooks 113a are moved along the lower hook guide grooves 122b corresponding thereto, and thus the hitting unit 120 may be lowered to an original position without being shaken.

The crushing tip 123 is exposed to the lower side through the lower end of the tip fixing shaft 122 and comes into contact with the tempered glass A to apply an impact so as to crush the tempered glass A as illustrated in FIG. 8 when the hitting unit 120 is lowered.

The crushing tip 123 is formed of a material having a high hardness to apply a large impact when in contact with the tempered glass A even when the size of the crushing tip 123 is small. To this end, the crushing tip 123 is formed of tungsten carbide or a material having a hardness equivalent thereto.

The crushing tip 123 is formed in the shape of an inverted triangle at a lower end of the tip support shaft 123a, minimizes a contact portion with the tempered glass A, and thus maximizes an impact at a time of hitting.

The upper outer guide tube 125 is formed on a concentric circle on the periphery of the tip fixing shaft 122, is moved along the lower outer guide tube 112 when the hitting unit 120 is lowered and guides the hitting unit 120 so that the hitting unit 120 may be stably lowered.

As illustrated in FIG. 8, the upper outer guide tube 125 is formed to have an inner diameter corresponding to an outer diameter of a lower outer guide tube 112, is moved along the outer wall surface of the lower outer guide tube 112 when the hitting unit 120 is lowered and allows the hitting unit 120 to be stably lowered without being shaken.

Here, the upper casing 121, the tip fixing shaft 122, and the upper outer guide tube 125 forming the hitting unit 120 may be integrally manufactured through injection molding, and the crushing tip 123 is inserted into the tip fixing shaft 122 so that the location of the crushing tip 123 is fixed.

The display unit 130 is provided on an upper surface of the hitting unit 120 to reinforce the strength of the hitting unit 120 and displays, to the user, that the user may crush the tempered glass A using the tempered glass crushing device 100 and then escape in an emergency situation.

The display unit 130 includes a display plate 131 coupled to an upper surface of the upper casing 121 and a plurality of coupling legs 133 protruding downward from an edge region of the display plate 131 and coupled to the upper casing 121. The display plate 131 is provided in a flat plate shape corresponding to the upper surface of the upper casing 121 and is coupled to the upper casing 121 to reinforce the strength of the upper casing 121.

Further, although not illustrated in a plate surface of the display plate 131, a phrase indicating that this device is a tempered glass crushing device used in an emergency situation is directly printed or a printing paper is attached to indicate, to the user, the purpose and method of use of the tempered glass crushing device 100. Further, a design element such as a logo may be attached to the display plate 131.

As illustrated in FIG. 4, a deformation prevention groove 135 is provided along an outer periphery of a lower portion of the display plate 131. The deformation prevention groove 135 prevents the display unit 130 from being deformed because of a property that can be deformed due to characteristics of a corrugated molded product when the display unit 130 is injection-molded.

The safety pin 140 is coupled between the support unit 110 and the hitting unit 120 to prevent the hitting unit 120 from being lowered arbitrarily in non-emergency situations. The safety pin 140 may be inserted between the support unit 110 and the hitting unit 120 in a normal time to prevent the hitting unit 120 from being lowered, and in emergency situations, the user may remove the safety pin 140 so that the hitting unit 120 may be lowered.

As illustrated in FIGS. 3 and 4, the safety pin 140 includes a safety pin body 141 in the form of a vertical plate, an outer tube fitting ring 143 that is coupled to the interior of the safety pin body 141 and is detachably coupled to the lower outer guide tube 112 of the support unit 110, and a handle 145 provided behind the safety pin body 141 so that the user may grip the safety pin 140.

The safety pin body 141, the handle 145, and the outer tube fitting ring 143 are integrally formed through injection molding. The safety pin body 141, together with the handle 145, is provided to surround the entire outer portion of the upper casing 121.

A side wall 141a is provided outside the safety pin body 141 to be connected to the handle 145, and the outer tube fitting ring 143 is formed inside the side wall 141a and the safety pin body 141. The outer tube fitting ring 143 is formed in a ring shape having an open front side and is fitted to the lower outer guide tube 112 as illustrated in FIG. 5.

Here, as illustrated in FIG. 3, the height d2 of the side wall 141a of the safety pin body 141 is provided to correspond to the height d1 between the support plate 111 and the holding step 115a of the shape retaining plate 115, and thus the safety pin 140 is inserted between the support plate 111 and the holding step 115a.

The outer tube fitting ring 143 is formed to have an outer diameter corresponding to the outer diameter of the lower outer guide tube 112 and is elastically unfolded, and the lower outer guide tube 112 is accommodated in the outer tube fitting ring 143.

A pressing neck 143a, which is provided in the form of a straight line having a predetermined length toward the front side and is in contact with and presses the outer wall surface of the lower outer guide tube 112, is formed at an end of the outer tube fitting ring 143. Further, an outer bent end 143b, which is formed to be bent toward the side wall 141a and supports the pressing neck 143a so that the pressing neck 143a is elastically unfolded or folded, is formed at an end of the pressing neck 143a.

Here, an elastic clearance space 144 of a first width W1 is provided so that the outer bent end 143b and the side wall 141a are spaced apart from each other. The elastic clearance space 144 forms a free space so that, when the safety pin 140 is fitted in the lower outer guide tube 112 or is separated from the lower outer guide tube 112, the pressing neck 143a is unfolded or folded.

Accordingly, as illustrated in FIG. 5, when the outer tube fitting ring 143 is fitted in the lower outer guide tube 112, the pressing neck 143a is unfolded, and a second width W2 of the elastic clearance space 144 becomes smaller than the first width W1.

When the outer bent end 143b is fixed to the side wall 141a without the elastic clearance space 144, the side wall 141a forms resistance against the elastic deformation of the pressing neck 143a, and thus the user cannot easily couple or separate the safety pin 140.

The handle 145 is provided behind the safety pin body 141, and as illustrated in FIG. 1, protrudes outward when the safety pin 140 is coupled between the support unit 110 and the hitting unit 120. Accordingly, the user may separate the safety pin 140 by gripping the handle 145 by hand and pulling the handle 145 back.

Meanwhile, an upper stopper 147 and a lower stopper 148 are provided at an upper end and a lower end of a central region of the safety pin body 141. The upper stopper 147 and the lower stopper 148 limit an insertion depth of the safety pin 140 inserted between the support unit 110 and the hitting unit 120, and at the same time, suppress rotation of the safety pin body 141 in combination with the support unit 110.

A process of using the tempered glass crushing device 100 having this configuration according to the present disclosure will be described with reference to FIGS. 1 to 8.

The tempered glass crushing device 100 according to the present disclosure is stored while attached to glass windows of buses, vehicles, buildings, or the like. That is, by attaching a double-sided tape to a bottom surface of the support unit 110, the tempered glass crushing device 100 is stored while attached to a surface of a glass window to be crushed in an emergency situation. In a general storage state, as illustrated in FIGS. 1 and 2, the tempered glass crushing device 100 is stored while the safety pin 140 is coupled thereto.

As illustrated in FIG. 5, the outer tube fitting ring 143 of the safety pin 140 is fitted to surround the lower outer guide tube 112 of the support unit 110, and thus the safety pin 140 is positioned between the support unit 110 and the hitting unit 120 to prevent the hitting unit 120 from being lowered arbitrarily in a non-emergency situation.

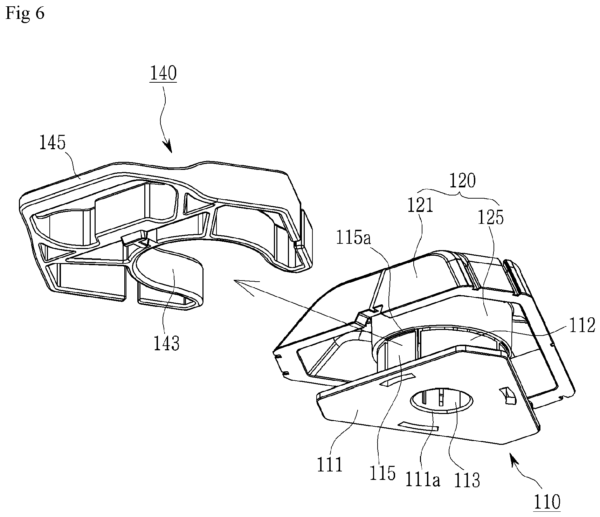

When an accident occurs, as illustrated in FIG. 6, the user separates the safety pin 140 from the support unit 110 and the hitting unit 120 by gripping and pulling the handle 145 to the rear side.

Even when the safety pin 140 is removed, as illustrated in FIGS. 6 and 7, since the lower end 125a of the upper outer guide tube 125 is held on the holding step 115a, the hitting unit 120 is maintained in a position when not lowered.

The user presses the upper surface of the upper casing 121. Due to the pressing of the upper casing 121, the shape retaining plate 115 is bent, and the holding step 115a is broken. The tip fixing shaft 122 is lowered along the inside of the crushing tip guide tube 113.

In this case, the upper hook 122c is moved along an inner wall surface of the crushing tip guide tube 113, and the lower hook 113a is moved along the lower hook guide groove 112b to guide vertical movement of the hitting unit 120.

Further, the upper outer guide tube 125 is lowered along the outer wall surface of the lower outer guide tube 112, and the hitting unit 120 is stably lowered without being shaken.

As the hitting unit 120 is lowered, the crushing tip 123 hits, applies an impact to, and crushes a desired position of the tempered glass A through the tip movement hole 111a.

As described above, the tempered glass crushing device according to the present disclosure applies an impact to and crushes a tempered glass as a crushing tip is lowered without using a separate elastic member. Since a separate elastic member is not used, the tempered glass crushing device has a flat structure without having a vertically long shape like a conventional awl.

Accordingly, even when being attached to a window or the like, the tempered glass crushing device can be cleanly stored without ruining the exterior appearance.

Further, since an elastic member is not used, a malfunction problem that the tempered glass crushing device is not properly operated due to failure of the elastic member according to the related art can be solved.

Further, a crushing tip having the same hardness as tungsten carbide is used, and even though the tempered glass crushing device has a flat structure, a minimum distance required for the hitting is secured, and thus the tempered glass can be crushed stably.

Further, in the tempered glass crushing device used once, since a shape retaining plate is broken or bent, a manager can easily visually identify whether the tempered glass crushing device has been used.

The embodiments of the tempered glass crushing device according to the present disclosure as described above are merely illustrative, and those skilled in the art to which the present disclosure pertains can appreciate that various modifications and other equivalent embodiments are possible therefrom. Therefore, it can be well understood that the present disclosure is not limited to the form described in the above detailed description. Thus, the technical protection scope of the present disclosure will be defined by the technical spirit of the appended claims. Further, it should be understood that the present disclosure includes all modifications, equivalents, and substitutions belonging to the spirit and scope of the present disclosure defined by the appended claims.

## Claims

1. A tempered glass crushing device comprising:
a support unit (110) that is disposed in contact with a surface of a tempered glass to be crushed and has a tip movement hole (111a) formed in a plate surface thereof;
a hitting unit (120) that is vertically movably coupled to an upper portion of the support unit (110) and has a crushing tip (123) for hitting the tempered glass through the tip movement hole (111a) while lowered to a central region; and
a safety pin (140) inserted between the support unit (110) and the hitting unit (120) to prevent the hitting unit (120) from being lowered arbitrarily,
wherein the support unit (110) includes:
a support plate (111) through which the tip movement hole (111a) is formed to pass and which is disposed on the surface of the tempered glass to be crushed;
a crushing tip guide tube (113) formed perpendicular to an outer periphery of the tip movement hole (111a) to guide lowering of the crushing tip (123); and
a lower outer guide tube (112) disposed on a concentric circle with the crushing tip guide tube (113) outside the crushing tip guide tube (113), and
the hitting unit (120) includes:
an upper casing (121) pressed for lowering;
a tip fixing shaft (122) that is formed vertically downward in a central region of the upper casing (121), accommodates the crushing tip (123) such that a lower end of the crushing tip (123) is exposed to a lower side, and is lowered along the crushing tip guide tube (113); and
an upper outer guide tube (125) that is provided on a concentric circle with an outer periphery of the tip fixing shaft (122) and is lowered to be circumscribed to the lower outer guide tube (112) when the hitting unit (120) is lowered.

2. The tempered glass crushing device of claim 1, wherein the lower outer guide tube (112) includes a plurality of guide plates (112a, 112b) arranged in an arc shape at regular angular intervals, and a plurality of shape retaining plates (115) that are arranged between the adjacent guide plates (112a, 112b), are formed at a height higher than the guide plates (112a, 112b), and are detachably coupled to the support plate (111) when the hitting unit (120) is lowered.

3. The tempered glass crushing device of claim 2, wherein the safety pin (140) includes:
a safety pin body (141);
an outer tube fitting ring (143) that is provided inside the safety pin body (141), is formed to correspond to an outer diameter of the lower outer guide tube (112), and is elastically coupled to the lower outer guide tube (112);
a handle (145) provided behind the safety pin body (141),
wherein a tip end of the outer tube fitting ring (143) includes:
a pressing neck (143a) which is formed in a straight shape in a predetermined length in a fitting direction of the lower outer guide tube (112) and is elastically in contact with and presses an outer wall of the lower outer guide tube (112); and
an outer bent end (143b) bent outward from an end of the pressing neck (143a), and
wherein an elastic clearance space (144) is formed between the outer bent end (143b) and the side wall (141a) of the safety pin body (141) so that the outer tube fitting ring (143) is elastically deformed when the lower outer guide tube (112) is attached or detached.

4. The tempered glass crushing device of claim 3, wherein a lower hook (113a) and an upper hook (122c), which are locked by and coupled to each other to guide the lowering of the tip fixing shaft (122), are provided at an upper end of the crushing tip guide tube (113) and a lower end of the tip fixing shaft (122) in corresponding shapes.

5. The tempered glass crushing device of claim 4, further comprising a display unit (130) detachably coupled to an upper surface of the upper casing (121).
